Europäisches Patentamt

European Patent Office  (1) Publication number: **0 057 242**

Office européen des brevets  **B1**

(12) **EUROPEAN PATENT SPECIFICATION**

(45) Date of publication of patent specification: **25.03.87**  (51) Int. Cl.⁴: **C 22 C 19/05, B 23 K 35/30**

(21) Application number: **81100784.8**

(22) Date of filing: **04.02.81**

(54) **High temperature alloy.**

| | |
|---|---|
| (43) Date of publication of application: **11.08.82 Bulletin 82/32** | (73) Proprietor: **EATON AUTOMOTIVE SPA.** **Corso Siracusa 16** **Torino (IT)** |
| (45) Publication of the grant of the patent: **25.03.87 Bulletin 87/13** | (72) Inventor: **Rigamonti, Flavio** **Via Michele Chiesa, 44** **S.Giorgio Canavese (Turin) (IT)** Inventor: **Bagnati, Ennio** **Via Bagetti, 10** **Turin (IT)** |
| (84) Designated Contracting States: **DE FR GB** | |
| (56) References cited: **DE-A-2 814 350** **DE-A-2 837 196** **GB-A-2 005 305** **GB-A-2 039 950** | (74) Representative: **Wagner, Karl H.** **WAGNER & GEYER Patentanwälte** **Gewuerzmuehlstrasse 5 Postfach 246** **D-8000 München 22 (DE)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 057 242

## Description

The invention relates to high temperature alloys, specifically to hard surfacing alloys.

Nickel-chromium alloys are already known which form heat, corrosion and abrasion resistant hard surfaces and which are suitable for use at elevated temperatures. Said known alloys are used, for example, in connection with valves for combustion engines. DE—A—28 37 196.2 discloses such alloys which avoid the use of the otherwise common but expensive alloy components like cobalt. GB—A—2 039 950 relates to Ni-based hard alloys and surfacing and welding consumables which are resistant to wear and corrosion. For example, said alloys may be employed in the hard facing of engine valves. A preferred alloy of this kind may have the following composition (in % by weight): Cr 34; C 1,2; Mo 10; Fe 3; Si 1; Nb 3; Ni balance.

It is an object of this invention to provide an alloy with higher resistance to oxidation and lead oxide in an internal combustion engine environment.

According to the invention this object is achieved by a nickel-chromium alloy comprising in weight percent carbon 1,6 to 2; silicon 0,7 to 1,1; chromium 25 to 28; molybdenum 6 to 8; iron 3 maximum; niobium 2,0 to 3,0; nickel and unavoidable impurities balance.

Further preferred embodiments of the invention are claimed in claims 2 to 9.

The composition of the alloy of the invention avoids the coarse acicular carbide formation during re-melt through a control in carbon, chromium, niobium and molybdenum contents.

The invention provides an alloy having mechanical properties, specifically hardness properties, which are maintained through the addition of a significant amount of niobium.

The invention provides a nickel-chromium alloy having a corrosion resistance to oxidation and lead oxide in an internal combustion engine environment which is better than the corrosion resistance of the alloys disclosed in DE—A—28 37 196, while at the same time the hardness is at least maintained.

Certain impurities and residual elements in recycled scraps commonly associated with alloys of the main alloying constituents can also be present.

One application of the alloy of this invention relates to a structural element, such as an engine valve, a valve seat or a precombustion chamber, which is surfaced with said alloy. Such elements have an abrasion resistant surface which performs well at elevated temperatures due to the good high temperature hardness of the alloy. Such structural elements also will have a greatly extended life. Oxidation, sulphidation or corrosion due to lead or other oxides is delayed because of the alloy surface which resists the corrosive effects present in an internal combustion engine. The structural element has these advantages despite being coated with an alloy which is substantially free of cobalt.

In another application of this invention a structural element can be cast from the claimed alloy.

The alloys of this invention are nickel based alloys containing approximately 58 to 65 weight percent nickel. Nickel as a base metal imparts a good oxidation resistance and high temperature hardness. This is particularly true when combined with the alloying elements used in the practice of this invention.

Chromium is added as an alloying element because it confers good oxidation resistance on the alloy particularly at elevated temperatures, such as 538°C—870°C. The chromium present helps insure the formation of a tight adherent oxide scale on the surface of the alloy. The oxide adhering to the alloy surface prevents further oxidation of the underlying metal.

Molybdenum and niobium are strengthening alloying elements providing dispersed hard complex carbide particles and precipitation hardening throughout the alloy making it abrasion resistant, stronger and tougher.

The preferred alloys have a substantial but controlled amount of carbides which provide good high temperature hardness.

Impurities may be present in the alloys of the invention; one example of a common impurity would be cobalt which is present in the common nickel, and chromium scrap in amounts of up to 5 percent. The alloys of this invention can be characterized as substantially free of cobalt despite the presence of residual cobalt. A further impurity is iron which can be present from the use of ferrochrome. Its amount in the alloy of the present invention is 3 percent by weight or less.

A further understanding can be had by referring to the accompanying example in which all parts and percentages are by weight unless otherwise indicated.

## Example

The experimental alloys were made by mixing pure elements and/or alloys and melting them in an induction furnace (about 200 Kg each—open air). The aimed chemistry of an embodiment of the invention (EXP 4) is listed in comparison with Stellites and an existing alloy EXP 10 in Table I.

TABLE I
Composition in weight—aimed or nominal

| | C | Mn | Si | Cr | Ni | Mo | W | V | Fe | Co | Nb |
|---|---|---|---|---|---|---|---|---|---|---|---|
| Stellite 1 | 2.8 | — | — | 30.0 | — | — | 12.75 | — | — | Bal. | — |
| EXP 10 | 2.8 | 0.5 | 1.0 | 29.0 | Bal. | 5.0 | — | — | 3.0 | — | — |
| Stellite 6 | 1.15 | — | — | 28 | — | — | 4.5 | — | — | Bal. | — |
| Stellite F | 1.75 | — | — | 25 | 22 | — | 12 | — | — | Bal. | — |
| EXP 4 | 1.7 | — | 0.8 | 26 | Bal. | 7.0 | — | — | 3.0 | — | 2.5 |

Stellite is a trademark of St. Div.-Cabot Corp., Kokomo Ind. USA.

After casting of hot hardness test specimens and rods (electrodes) for arc welding, the amount of some key elements was comparatively checked (Table II).

TABLE II
Composition in weight (measured for EXP 4 alloy)

| | C | Cr | Mo | Fe | Nb | W | V |
|---|---|---|---|---|---|---|---|
| EXP 4 | 1.68 | 25.85 | 6.58 | 3.0 | 2.77 | — | — |

With the rods (electrodes) five samples each of the alloys listed in Table I were prepared as automotive poppet valve hard facings, and some characteristics were checked, in accordance with the test description (see below).

TABLE III

| | 1. Engine test | | 2. Hot impact test |
|---|---|---|---|
| | Mean life (hrs. to failure) | Difference in % with respect to Stellite F | Average life material consumption (in mm per 100 hrs) |
| Stellite F | 420 | 0 | 0,15 |
| EXP 10 | 366 | −15% | 0,20 |
| EXP 4 | 381 | − 9,5% | 0,20 |

The above data were obtained in the following conditions:

Test 1—Engine test
Air cooled, 2 l engine, running on a dynamometer with the set-up as hereunder described:
Revolution per minute: 4.000
Full load
Wide open throttle
Temperature: 15% higher than in standard conditions
Spark advance: 40° before top dead point
Ratio of air mass vs/fuel mass: 1 (estimated)
Carburettor fuel maximum nozzle reduced by 11% in section with respect to standard condition.

Test 2—Hot impact test
Special fixture, in which an hydraulically driven test poppet valve was compelled to impact on a seat insert (EMS 202 material) in conditions controlled as hereunder described:

Temperature: 650°C (oxy-acetylene flame source)
Impact load: 710 kg
Frequency: 10 cycles/s
Test time: 100 h
Metal/metal mating surface reduced by 65% by means of symmetrical reliefs milled on seat insert.

3

**0 057 242**

TABLE IV
(Vickers hardness vs/temperature)—Vickers pyramid indenter 10 kg load (HV10)

| Alloy | Room temperature | (538°C) | (650°C) | (760°C) | (870°C) |
|---|---|---|---|---|---|
| EXP 4 | 470 | 400 | 350 | 260 | n.d. |

The above figures can be approximately converted into Brinell hardness (HBN) by using a conversion table. Inherent values are listed hereunder:

TABLE V
(HBN hardness vs/temperature)

| Alloy | Room temperature | 1000°F (538°C) | 1200°F (650°C) | 1400°F (760°C) | 1600°F 870°C |
|---|---|---|---|---|---|
| EXP 4 | 470 | 390 | 350 | 260 | n.d. |

The alloys of this invention (EXP 4) have hot hardness figures comparable with Stellite 1 or existing Ni-Cr alloys.

The peculiarity of the alloys of this invention is nevertheless an improved corrosion resistance in comparison with existing EXP 10 (as per Table III) due to the reduction in amount and size of acicular carbides which are quite typical of such kind of alloys and have proved to perform detrimentally as corrosion patterns initiators.

**Claims**

1. A high temperature nickel-chromium alloy comprising in weight percent about:

| | |
|---|---|
| Carbon | 1,6 to 2 |
| Silicon | 0,7 to 1,1 |
| Chromium | 25 to 28 |
| Molybdenum | 6 to 8 |
| Iron | 3 maximum |
| Niobium | 2,0 to 3,0 |
| Nickel and unavoidable impurities | Balance |

2. An alloy as set forth in claim 1 with the following chemistry in weight percent:

| | |
|---|---|
| Carbon | 1,7 |
| Silicon | 0,8 |
| Chromium | 26 |
| Molybdenum | 7,0 |
| Iron | 3,0 |
| Niobium | 2,5 |
| Nickel and unavoidable impurities | balance |

4

3. An alloy as set forth in claim 1 comprising in weight percent:

| | |
|---|---|
| Carbon | 1,68 |
| Chromium | 25,85 |
| Molybdenum | 6,58 |
| Iron | 3,0 |
| Niobium | 2,77 |

4. An article of manufacture comprising a member having a portion which is subjected to abrasion and wear at elevated temperatures said portion being coated with an alloy, as claimed in any of claims 1 to 3.

5. The article of claim 4 where said member is an engine poppet valve and said portion comprises the seating surface thereof.

6. The article of claim 4 where said member is a pre-combustion chamber for an internal combustion engine.

7. The article of item 4 where said member comprises a valve member adapted for contact with a valve seat, and said portion comprises the seating surface of said valve member.

8. A cast article made from an alloy as claimed in any of claims 1—3.

9. A cast article according to claim 8 where said article is a precombustion chamber for an internal combustion engine.

**Patentansprüche**

1. Hochwarmfeste Nickel-Chrom-Legierung, die in Gewichtsprozent ungefähr folgendes aufweist:

| | |
|---|---|
| Kohlenstoff | 1,6 bis 2 |
| Silicium | 0,7 bis 1,1 |
| Chrom | 25 bis 28 |
| Molybdän | 6 bis 8 |
| Eisen | 3 max. |
| Niob | 2,0 bis 3,0 |
| Nickel und nicht vermeidbare Verunreinigungen | Rest |

2. Legierung nach Anspruch 1 mit der folgenden Zusammensetzung in Gewichtsprozent:

| | |
|---|---|
| Kohlenstoff | 1,7 |
| Silicium | 0,8 |
| Chrom | 26 |
| Molybdän | 7,0 |
| Eisen | 3,0 |
| Niob | 2,5 |
| Nickel und nicht vermeidbare Verunreinigungen | Rest |

3. Legierung nach Anspruch 1, wobei in Gewichtsprozent folgendes vorgesehen ist:

| | |
|---|---|
| Kohlenstoff | 1,68 |
| Chrom | 25,85 |
| Molybdän | 6,58 |
| Eisen | 3,0 |
| Niob | 2,77 |

4. Ein Herstellungsgegenstand, der ein Glied aufweist, das einen Teil besitzt, der bei erhöhten Temperaturen einem Abrieb und einer Abnützung ausgesetzt ist, wobei der Teil mit einer Legierung überzogen ist, wie sie in einem der Ansprüche 1—3 beansprucht ist.

5. Gegenstand nach Anspruch 4, wobei das Glied ein Motorsitzventil ist und der Teil die Sitzoberfläche desselben ist.

6. Gegenstand nach Anspruch 4, wobei das Glied eine Vorverbrennungskammer eines Verbrennungsmotors ist.

7. Gegenstand nach Anspruch 4, wobei das Glied ein Ventilglied aufweist, welches zur Berührung mit einem Ventilsitz geeignet ist, und wobei der Teil die Sitzoberfläche des Ventilglieds ist.

8. Gegossener Gegenstand, hergestellt aus einer Legierung nach einem der Ansprüche 1—3.

9. Gegossener Gegenstand nach Anspruch 8, wobei der Gegenstand eine Vorverbrennungskammer einer Verbrennungsmaschine ist.

**Revendications**

1. Alliage nickel-chrome pour hautes températures comprenant, en poids, environ:

| | |
|---|---|
| Carbone | 1,6 à 2% |
| Silicium | 0,7 à 1,1% |
| Chrome | 25 à 28% |
| Molybdène | 6 à 8% |
| Fer | 3%, maximum |
| Niobium | 2,0 à 3,0% |
| Nickel et impuretés inévitables | La reste |

2. Alliage selon la revendication 1, avec la composition chimique suivante, en poids:

| | |
|---|---|
| Carbone | 1,7% |
| Silicium | 0,8% |
| Chrome | 26% |
| Molybdène | 7,0% |
| Fer | 3,0% |
| Niobium | 2,5% |
| Nickel et impuretés inévitables | La reste |

3. Alliage selon la revendication 1, comprenant, en poids:

| | |
|---|---|
| Carbone | 1,68% |
| Chrome | 25,85% |
| Molybdène | 6,58% |
| Fer | 3,0% |
| Niobium | 2,77% |

4. Article manufacturé comprenant un élément comportant une partie qui est soumise à une abrasion et à une usure à des températures élevées, ladite partie étant revêtue d'un alliage selon l'une quelconque des revendications 1 à 3.

5. Article selon la revendication 4, dans lequel ledit élément est une soupape circulaire de moteur et ladite partie constitue la surface d'appui sur le siège de cette soupape.

6. Article selon la revendication 4, dans lequel ledit élément est une chambre de précombustion pour un moteur à combustion interne.

7. Article selon la revendication 4, dans lequel ledit élément comprend un élément de soupape conçu pour entrer en contact avec un siège de soupape, et ladite partie comprend la surface d'appui sur le siège dudit élément de soupape.

8. Article coulé réalisé à partir d'un alliage selon l'une quelconque des revendications 1—3.

9. Article coulé selon la revendication 8, dans lequel ledit article est une chambre de précombustion pour moteur à combustion interne.